# EUROPÄISCHE PATENTANMELDUNG

(11) **EP 4 300 395 A1**
(43) Veröffentlichungstag der Anmeldung: **03.01.2024**
(21) Anmeldenummer: 23179128.6
(22) Anmeldetag: 14.06.2023
(51) Int. Cl.: G06Q 10/08, G06Q 50/28

(54) **AUTOMATISCHE ERKENNUNG EINES BELADUNGSZUSTANDES EINES LADUNGSTRÄGERS**

(30) Priorität: 30.06.2022 DE 102022116397
(71) Anmelder: STILL GmbH, 22113 Hamburg (DE)
(72) Erfinder: ERBTS, Patrick, 21244 Buchholz Nordheide (DE)
(74) Vertreter: Patentship Patentanwaltgesellschaft

(57) **Zusammenfassung**

Verfahren (300) zum automatischen Erfassen eines Beladungszustands eines Ladungsträgers, wobei der Ladungsträger in einem industriellen Umfeld angeordnet ist, mit folgenden Merkmalen: Erfassen (301) eines Umfeldbereichs des Ladungsträgers durch mindestens einen Sensor, um erfasste Umfelddaten zu erhalten; Auswählen (303) eines elektronischen Beladungszustandsattributs aus einer Mehrzahl von elektronischen Beladungszustandsattributen auf der Basis der erfassten Umfelddaten mittels eines neuronalen Netzes, wobei das neuronale Netz zur Auswahl von elektronischen Beladungszustandsattributen eingerichtet ist, wobei das neuronale Netz durch eine Steuerungseinrichtung ausgeführt wird, und wobei das elektronische Beladungszustandsattribut einen den Beladungszustand des Ladungsträgers repräsentiert; Zuordnen (305) des ausgewählten elektronischen Beladungszustandsattributes zu einer Position des Ladungsträgers in dem industriellen Umfeld; und Anzeigen (307) der Position des Ladungsträgers auf einer elektronischen Anzeige.

## Beschreibung

Die Erfindung betrifft ein Verfahren und eine Systemanordnung zum automatischen Erfassen eines Beladungszustands eines Ladungsträgers.

Zum Wiederauffinden (im Englischen auch als Tracken bezeichnet) von Ladungsträgern, wie beispielsweise Paletten, in einem industriellen Umfeld, insbesondere in einem Warenlager, werden üblicherweise Ladungsträger mit Sensoren oder Trackern ausgestattet. Die Sensoren bzw. Tracker können die aktuelle Position des Ladungsträgers an einen Empfänger übermitteln, um eine Lokalisierung des Ladungsträgers in dem industriellen Umfeld zu erreichen. Nachteilig bei herkömmlichen Verfahren zum Wiederauffinden von Ladungsträgern ist die Abhängigkeit von an den Ladungsträgern angeordneten Trackern, welche beispielsweise gewöhnlich keine Informationen über einen Beladungszustand der Ladungsträger bereitstellen können.

Der Erfindung liegt daher die Aufgabe zugrunde, eine Position und einen Beladungszustand eines Ladungsträgers vorteilhaft zu ermitteln und anzuzeigen.

Diese Aufgabe wird durch die Merkmale der unabhängigen Ansprüche gelöst. Vorteilhafte Ausführungsformen der Erfindung sind Gegenstand der abhängigen Ansprüche, der Beschreibung sowie der beiliegenden Figuren.

Gemäß einem ersten Aspekt wird die erfindungsgemäße Aufgabe gelöst durch ein Verfahren zum automatischen Erfassen eines Beladungszustands eines Ladungsträgers, wobei der Ladungsträger in einem industriellen Umfeld angeordnet ist, mit folgenden Merkmalen: Erfassen eines Umfeldbereichs des Ladungsträgers durch mindestens einen Sensor, um erfasste Umfelddaten zu erhalten; Auswählen eines elektronischen Beladungszustandsattributs aus einer Mehrzahl von elektronischen Beladungszustandsattributen auf der Basis der erfassten Umfelddaten mittels eines neuronalen Netzes, wobei das neuronale Netz zur Auswahl von elektronischen Beladungszustandsattributen eingerichtet ist, wobei das neuronale Netz durch eine Steuerungseinrichtung ausgeführt wird, und wobei das elektronische Beladungszustandsattribut den Beladungszustand des Ladungsträgers repräsentiert; Zuordnen des ausgewählten elektronischen Beladungszustandsattributes zu einer Position des Ladungsträgers in dem industriellen Umfeld; und Anzeigen der Position des Ladungsträgers auf einer elektronischen Anzeige.

Dadurch wird ein von dem Beladungszustand abhängiges Anzeigen der Position des Ladungsträgers bewirkt.

Unter dem Ladungsträger kann eine Transporteinheit zum Transportieren von Waren, wie beispielsweise eine Palette, eine Gitterbox, ein Regal, ein Schubkasten oder ein Roboter, insbesondere ein Flurförderzeug, verstanden werden.

In einer Ausführungsform kann der zumindest eine Sensor beispielsweise einen stationären Sensor umfassen, der beispielsweise in dem industriellen Umfeld an der Infrastruktur, wie beispielsweise an einer Decke oder an einer Wand, eines Warenlagers angeordnet ist. Alternativ oder zusätzlich kann der zumindest eine Sensor beispielsweise eine Sensoranordnung umfassen, welche beispielsweise an Fahrzeugen, insbesondere Flurförderzeugen, Förderbändern oder Gestellen angebracht, oder durch Personen getragen werden kann.

In einer Ausführungsform werden die Position und das Beladungszustandsattribut in einer digitalen Karte des industriellen Umfelds, insbesondere in einem digitalen Zwilling des industriellen Umfelds, angezeigt.

Dadurch kann die Position relativ zu dem industriellen Umfeld angezeigt werden.

In einer Ausführungsform ist das industrielle Umfeld durch eine digitale Karte, insbesondere durch einen digitalen Zwilling, repräsentiert, wobei die Position des Ladungsträgers aus den Umfelddaten durch die Steuerungseinrichtung, insbesondere mittels des neuronalen Netzes oder durch Mustererkennung, bestimmt wird, oder wobei der zumindest eine Sensor die Position des Ladungsträgers erfasst, oder wobei eine von dem Ladungsträger ausgesendete Positionsinformation erfasst wird.

Wenn die Position des Ladungsträgers aus den Umfelddaten durch die Steuerungseinrichtung bestimmt wird, dann kann die Position indirekt aus den Umfelddaten, beispielsweise basierend auf einem Kamerabild, durch die Steuerungseinrichtung ermittelt werden. Wenn der zumindest eine Sensor die Position des Ladungsträgers erfasst, dann kann die Position direkt, beispielsweise basierend auf LIDAR-Daten, durch den Sensor ermittelt werden. Wenn eine von dem Ladungsträger ausgesendete Positionsinformation erfasst wird, dann kann die Position basierend auf der Positionsinformation durch die Steuerungseinrichtung ermittelt werden.

In einer Ausführungsform ist eine Ausgabe des neuronalen Netzes ein digitaler Merkmalssatz, welcher das Beladungszustandsattribut repräsentiert.

Dadurch kann das Beladungszustandsattribut aus dem digitalen Merkmalssatz ermittelt werden.

In einer Ausführungsform werden die erfassten Umfelddaten von dem zumindest einen Sensor über ein Kommunikationsnetzwerk an die Steuerungseinrichtung ausgesendet.

Dadurch können die erfassten Umfelddaten über das Kommunikationsnetzwerk an die Steuerungseinrichtung übertragen werden.

In einer Ausführungsform werden der Beladungszustand, insbesondere zusammen mit einer Positionsinformation, über ein Kommunikationsnetzwerk an ein mobiles Kommunikationsgerät, insbesondere an ein Smartphone, ausgesendet, wobei die elektronische Anzeigeeinrichtung durch das mobile Kommunikationsgerät implementiert ist.

Dadurch kann der Beladungszustand und die Position durch das mobile Kommunikationsgerät in dem industriellen Umfeld angezeigt werden.

In einer Ausführungsform umfasst das mobile Kommunikationsgerät ein Smartphone, eine Smartwatch, ein Tablet, ein Laptop, ein Kommunikationsgerät in einem Flurförderzeug und/oder ein Kommunikationsgerät in einem Terminal eines Warenlagers.

In einer Ausführungsform umfasst das Kommunikationsnetzwerk zumindest ein drahtloses Kommunikationsnetzwerk, insbesondere ein WLAN-Kommunikationsnetzwerk, oder ein Bluetooth-Kommunikationsnetzwerk, oder ein 5G-Kommunikationsnetzwerk.

Dadurch kann eine kabellose Übertragung der Sensordaten sowie des Beladungszustands und der Position des Ladungsträgers bewirkt werden.

In einer Ausführungsform umfasst das Kommunikationsnetzwerk ein kabelgebundenes Kommunikationsnetzwerk.

In einer Ausführungsform sind unterschiedliche Beladungszustände durch unterschiedliche Zusammensetzung der Beladung des Ladungsträgers, insbesondere durch eine erste Warengruppe und eine zweite Warengruppe, oder durch unterschiedliche Beladungsmengen des Ladungsträgers bestimmt, und wobei das neuronale Netz das Beladungszustandsattribut auswählt, welches einer erfassten Zusammensetzung der Beladung des Ladungsträgers oder einer erfassten Beladungsmenge des Ladungsträgers zugeordnet ist.

Durch wird eine Auswahl eines Beladungszustandsattributs abhängig von unterschiedlicher Beladungsmenge oder unterschiedlicher Beladungszusammensetzung des Ladungsträgers bewirkt.

In einer Ausführungsform werden das Auswählen eines elektronischen Beladungszustandsattributs, das Zuordnen des ausgewählten elektronischen Beladungszustandsattributes und das Anzeigen der Position des Ladungsträgers ansprechend auf den Empfang einer elektronischen Anfrage nach Anzeigen von Ladungsträgern mit einem vorbestimmten Beladungszustand ausgeführt.

Dadurch kann die von dem Beladungszustand abhängige Anzeige der Position des Ladungsträgers auf den vorbestimmten Beladungszustand beschränkt sein.

In einer Ausführungsform wird die elektronische Anfrage mittels einer Benutzerschnittstelle, insbesondere einer graphischen Benutzerschnittstelle, einer Tastatur und/oder einer Audioschnittstelle erzeugt.

Dadurch kann die elektronische Anfrage durch einen Benutzer über die Benutzerschnittstelle eingegeben werden.

In einer Ausführungsform ist die Benutzerschnittstelle eine Audioschnittstelle, wobei die Audioschnittstelle einen Sprachbefehl eines Benutzers aufnimmt, und wobei der Sprachbefehl durch eine Spracherkennung, insbesondere mittels domainspezifischer Spracherkennung (Domain Specific Language) in die elektronische Anfrage, insbesondere durch die Steuerungseinrichtung, transformiert wird.

Dadurch kann die elektronische Anfrage durch einen Benutzer besonders einfach und direkt eingegeben werden, beispielsweise ohne Berührung von Eingabeelementen.

In einer Ausführungsform implementiert der zumindest eine Sensor eine Bildkamera, einen Laser-Scanner und/oder einen Ultraschallsensor. Die Bildkamera kann beispielsweise zur Erfassung bewegter Bilder ausgebildet sein.

Ist der Sensor eine Bildkamera, dann kann der Ladungsträger visuell erfasst werden. Ist der Sensor ein Laser-Scanner oder ein Ultraschallsensor, dann kann der Ladungsträger beispielsweise über Distanzmessung erfasst werden.

In einer Ausführungsform ist der Ladungsträger eine Palette oder ein Roboter. Der Roboter kann ein Industrieroboter sein, welcher ausgebildet ist, zusätzlich Aufgaben eines Industrieroboters zu übernehmen, wie beispielsweise autonomer Waren- oder Teiletransport, Gabelstaplerfunktionen. In einer Ausführungsform ist der Roboter translatorisch beweglich. In einer Ausführungsform ist der Roboter eine Vorrichtung zur Beförderung von Waren, beispielsweise ein autonomes oder teilautonomes Fahrzeug, insbesondere Flurförderzeug.

Gemäß einem zweiten Aspekt wird die erfindungsgemäße Aufgabe gelöst durch eine Systemanordnung zum automatischen Erfassen eines Beladungszustands eines Ladungsträgers, wobei der Ladungsträger in einem industriellen Umfeld angeordnet ist, mit folgenden Merkmalen: zumindest einem Sensor zum Erfassen eines Umfeldbereichs des Ladungsträgers durch den mindestens einen Sensor, um erfasste Umfelddaten zu erhalten; einer Steuerungseinrichtung, welche ausgebildet ist, ein elektronisches Beladungszustandsattribut aus einer Mehrzahl von elektronischen Beladungszustandsattributen auf der Basis der erfassten Umfelddaten mittels eines neuronalen Netzes auszuwählen, wobei das neuronale Netz zur Auswahl von elektronischen Beladungszustandsattributen eingerichtet ist, wobei das neuronale Netz durch die Steuerungseinrichtung ausgeführt wird, und wobei das elektronische Beladungszustandsattribut den Beladungszustand des Ladungsträgers repräsentiert; wobei die Steuerungseinrichtung ferner ausgebildet ist, das ausgewählte elektronische Beladungszustandsattribut zu einer Position des Ladungsträgers in dem industriellen Umfeld zuzuordnen; und einer elektronischen Anzeige zum Anzeigen der Position des Ladungsträgers, welchem das Beladungszustandsattribut zugeordnet ist.

Dadurch wird ein von dem Beladungszustand abhängiges Anzeigen der Position des Ladungsträgers bewirkt.

In einer Ausführungsform ist die Systemanordnung ausgebildet, das Verfahren gemäß dem ersten Aspekt auszuführen.

Mit der Erfindung gemäß dem ersten und zweiten Aspekt sind wesentliche Vorteile verbunden:
Die Ladungsträger und auf den Ladungsträgern aufgeladene Waren müssen zur Positionsbestimmung nicht mit eigenen Sensoren oder Trackern ausgestattet werden. Somit lassen sich Objekte, wie die Ladungsträger und auf den Ladungsträgern aufgeladene Waren, auf- und wiederfinden, insbesondere in einem Warenlager, ohne dass eine aufwändige Umrüstung der Objekte notwendig ist. Ferner können beispielsweise die Sensoren an Positionen angebracht werden, beispielsweise an Decken oder Wänden eines Warenlagers, welche die Wahrscheinlichkeit einer Beschädigung oder Entwendung der zur Positionsbestimmung notwendigen Sensoren während eines üblichen Betriebs in dem industriellen Umfeld minimiert. Beispielsweise kann auf bereits vorhandene Sensoren zurückgegriffen werden. Durch das Auswählen des Beladungszustandsattribut können für eine Informationsanfrage überflüssige Informationen herausgefiltert werden, und somit einem Benutzer der elektronischen Anzeige nur die relevanten Informationen visuell bereitgestellt werden.

Die für den Gegenstand des ersten Aspekts genannten Ausführungsformen sind ebenfalls Ausführungsformen für den Gegenstand des zweiten Aspekts.

Weitere Vorteile und Einzelheiten der Erfindung werden beispielhaft anhand der in den schematischen Figuren dargestellten Ausführungsbeispielen näher erläutert. Hierbei zeigt:
Figur 1 eine schematische Aufsicht einer Systemanordnung gemäß einer Ausführungsform zum automatischen Erfassen eines Beladungszustands eines Ladungsträgers;
Figur 2 eine elektronische Anzeige der Systemanordnung gemäß einer Ausführungsform; und
Figur 3 ein Flussdiagramm, welches Schritte eines Verfahrens gemäß einer Ausführungsform zum automatischen Erfassen eines Beladungszustands eines Ladungsträgers illustriert.

In der folgenden Beschreibung wird auf die beiliegenden Figuren Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen der vorliegenden Erfindung werden unter Bezugnahme auf die Figuren beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der vorliegenden Erfindung zu vermitteln.

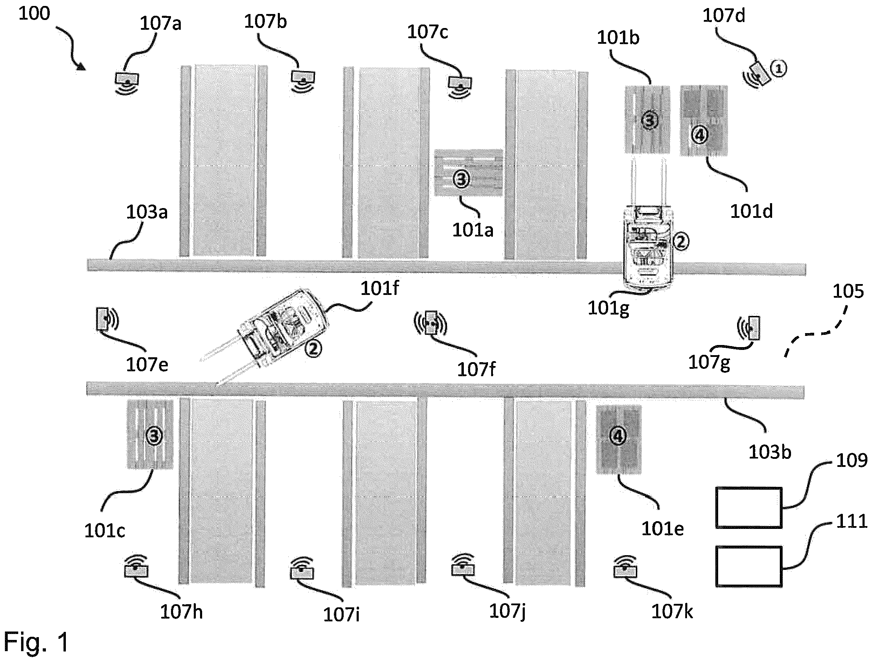

Figur 1 zeigt eine schematische Aufsicht einer Systemanordnung 100 gemäß einer Ausführungsform zum automatischen Erfassen eines Beladungszustands eines Ladungsträgers 101a-g, wobei der Ladungsträger 101a-g in einem industriellen Umfeld angeordnet ist. In der Figur 1 ist das industrielle Umfeld beispielhaft durch zwei Regalanordnungen 103a-b dargestellt, welche beispielsweise zur Lagerung von Waren und/oder als Paletten ausgebildeten Ladungsträger 101a-g ausgebildet sein können. Wie in der Figur 1 ferner dargestellt, können die zwei Regalanordnungen durch beabstandete Gänge 105 gekennzeichnet sein, in welche die Ladungsträger 101a-g temporär angeordnet seien können, beispielsweise zur Bewegung oder zur temporären Zwischenlagerung.

Wie in der Figur 1 dargestellt, kann der Ladungsträger 101a-g eine Palette sein, auf welcher beispielsweise Waren angeordnet werden können. Alternativ kann der Ladungsträger 101a-g ein Roboter sein, welcher autonom oder teilautonom, beispielsweise ferngesteuert, Waren oder insbesondere als Paletten ausgebildete Ladungsträger 101a-g aufnehmen und/oder befördern kann.

Die Systemanordnung 100 umfasst zumindest einen Sensor 107a-k zum Erfassen eines Umfeldbereichs des Ladungsträgers 101a-g durch den mindestens einen Sensor 107a-k, um erfasste Umfelddaten zu erhalten. Der zumindest eine Sensor 107a-k kann zur Erfassung eine Bildkamera, einen Laser-Scanner und/oder einen Ultraschallsensor implementieren. Der zumindest eine Sensor 107a-k kann beispielsweise eine Position des Ladungsträgers 101a-g erfassen.

Die Systemanordnung 100 umfasst ferner eine in Figur 1 lediglich schematisch dargestellte Steuerungseinrichtung 109, welche ausgebildet ist, ein elektronisches Beladungszustandsattribut aus einer Mehrzahl von elektronischen Beladungszustandsattributen auf der Basis der erfassten Umfelddaten mittels eines neuronalen Netzes, insbesondere mittels eines tiefen neuronalen Netzes (im Englischen auch bezeichnet als Deep Neural Network, DNN), auszuwählen. Die Steuerungseinrichtung 109 kann beispielsweise eine programmierbare Datenverarbeitungseinrichtung sein, die lokal auf einem Knoten-Server (im Englischen auch bezeichnet als Edge-Server) der industriellen Umgebung und/oder global auf einem Server außerhalb des lokalen Netzwerkes der industriellen Umgebung, insbesondere auf einem Cloud-Server, ausführbar ist.

Die erfassten Umfelddaten können von dem zumindest einen Sensor 107a-k über ein Kommunikationsnetzwerk an die Steuerungseinrichtung 109 ausgesendet werden. Das Kommunikationsnetzwerk kann zumindest ein drahtloses Kommunikationsnetzwerk umfassen, insbesondere ein WLAN-Kommunikationsnetzwerk, oder ein Bluetooth-Kommunikationsnetzwerk, oder ein 5G-Kommunikationsnetzwerk.

Das neuronale Netz wird durch die Steuerungseinrichtung 109 ausgeführt und ist zur Auswahl von elektronischen Beladungszustandsattributen eingerichtet. Das elektronische Beladungszustandsattribut repräsentiert den Beladungszustand des Ladungsträgers 101a-g. Eine Ausgabe des neuronalen Netzes kann ein digitaler Merkmalssatz sein, welcher das Beladungszustandsattribut repräsentiert.

Die von dem zumindest einen Sensor 107a-k erfasste Position des Ladungsträgers 101a-g kann beispielsweise von dem zumindest einen Sensor 107a-k über ein Kommunikationsnetzwerk an die Steuerungseinrichtung 109 ausgesendet werden. Alternativ oder zusätzlich kann die Steuerungseinrichtung 109 ausgebildet sein, eine von dem Ladungsträger 101a-g ausgesendete Positionsinformation zu erfassen. Ferner kann die Position des Ladungsträgers 101a-g aus den Umfelddaten durch die Steuerungseinrichtung 109, insbesondere mittels des neuronalen Netzes oder durch Mustererkennung, bestimmt werden.

Die Steuerungseinrichtung 109 ist ferner ausgebildet sein, das ausgewählte elektronische Beladungszustandsattribut zu der Position des Ladungsträgers 101a-g in dem industriellen Umfeld zuzuordnen.

Unterschiedliche Beladungszustände können durch unterschiedliche Zusammensetzung der Beladung des Ladungsträgers 101a-g, insbesondere durch eine erste Warengruppe und eine zweite Warengruppe, oder durch unterschiedliche Beladungsmengen des Ladungsträgers 101a-g bestimmt sein. Unterschiedliche Beladungsmengen der Ladungsträger 101a-g sind in der Figur 1 durch beispielhaft als Paletten ausgebildete unbeladene Ladungsträger 101a-c schematisch dargestellt. Ferner in der Figur 1 sind beispielhaft als Roboter, insbesondere Flurförderzeuge, ausgebildete weitere unbeladene Ladungsträger 101f-g, ein teilweise beladener Ladungsträger 101d und ein vollständig beladener Ladungsträger 101e schematisch dargestellt. Beispielsweise kann der teilweise beladene Ladungsträger 101d mit der ersten Warengruppe beladen sein und kann der vollständig beladene Ladungsträger 101e mit der zweiten Warengruppe beladen sein. Die Sensoren 107a-k können beispielsweise ausgebildet sein, Informationen über die Zusammensetzung der Beladung, wie eine Form und/oder semantische Informationen der von den Ladungsträgern 101a-g aufgenommenen Waren, zu erfassen und diese zur Kategorisierung der Ladungszusammensetzung an die Steuerungseinrichtung 109 zu senden. Das neuronale Netz kann das Beladungszustandsattribut auswählen, welches einer erfassten Zusammensetzung der Beladung des Ladungsträgers 101a-g oder einer erfassten Beladungsmenge des Ladungsträgers 101a-g zugeordnet ist.

Die Systemanordnung 100 umfasst ferner eine in Figur 1 lediglich schematisch dargestellte elektronische Anzeige 111 zum Anzeigen der Position des Ladungsträgers 101a-g, welchem das Beladungszustandsattribut zugeordnet ist.

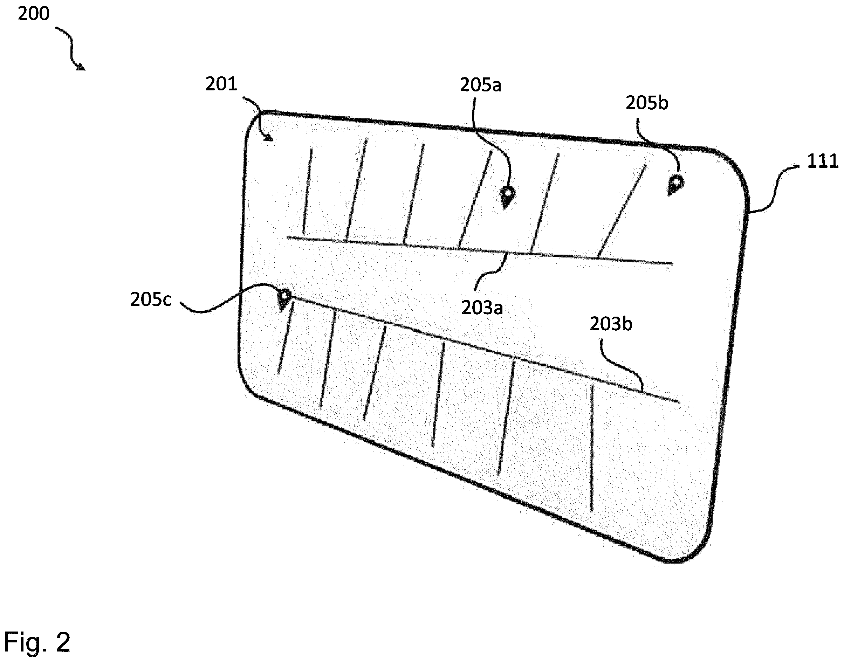

Figur 2 zeigt die elektronische Anzeige 111 der Systemanordnung 100 gemäß einer Ausführungsform. Es wird auf die zur Figur 1 beschriebene Ausführungsform verwiesen, wonach die Systemanordnung zumindest einen Sensor 107a-k, eine Steuerungseinrichtung 109 und die elektronische Anzeige 111 umfasst. Wie in der Figur 2 dargestellt, kann die elektronische Anzeige 111 durch ein mobiles Kommunikationsgerät 200 implementiert sein, insbesondere durch ein Smartphone. Der Beladungszustand kann, insbesondere zusammen mit der Positionsinformation und/oder der Position, über das Kommunikationsnetzwerk an das mobile Kommunikationsgerät 200, ausgesendet werden.

Wie in der Figur 2 dargestellt, können die Position und das Beladungszustandsattribut in einer digitalen Karte 201 des industriellen Umfelds, insbesondere in einem digitalen Zwilling des industriellen Umfelds, angezeigt werden. Das industrielle Umfeld kann durch die digitale Karte 201, insbesondere durch den digitalen Zwilling, repräsentiert sein. Wie in der Figur 2 dargestellt, kann die digitale Karte 201 ein, insbesondere vereinfachtes, Abbild 203a-b des industriellen Umfelds umfassen. Das Abbild 203a-b des industriellen Umfeldes repräsentiert beispielhaft die in der Figur 1 dargestellten Regalanordnungen 103a-b.

Das Auswählen eines elektronischen Beladungszustandsattributs, das Zuordnen des ausgewählten elektronischen Beladungszustandsattributes und das Anzeigen der Position des Ladungsträgers 101a-g kann ansprechend auf den Empfang einer elektronischen Anfrage nach Anzeigen von Ladungsträgern 101a-g mit einem vorbestimmten Beladungszustand ausgeführt werden. Die elektronische Anfrage kann mittels einer Benutzerschnittstelle, insbesondere einer graphischen Benutzerschnittstelle, einer Tastatur und/oder einer Audioschnittstelle erzeugt werden.

Die Audioschnittstelle kann beispielsweise einen Sprachbefehl eines Benutzers aufnehmen. Der Sprachbefehl kann durch eine Spracherkennung, insbesondere mittels domainspezifischer Spracherkennung (im Englischen auch als Domain Specific Language bezeichnet) in die elektronische Anfrage, insbesondere durch die Steuerungseinrichtung 109, transformiert werden.

Die Transformierung kann beispielsweise eine Extraktion der wichtigsten Merkmale, wie charakteristische Satzbausteine, in eine maschinenlesbare Textform umfassen. Die maschinenlesbare Textform kann beispielsweise kontextbasiert durch die Steuerungseinrichtung 109 interpretiert werden, insbesondere durch Implementierung eines weiteren neuronalen Netzes. Beispielweise kann ein Sprachbefehl "Lokalisiere alle Paletten ohne Beladung" lauten. Die Figur 2 zeigt beispielhaft das daraufhin durch das neuronale Netz der Steuerungseinrichtung 109 ermittelte Beladungszustandsattribut und die entsprechend angezeigten Positionen anhand von Symbolen 205a-c der Ladungsträger 101a-g auf der elektronische Anzeige 111.

Die Benutzerschnittstelle kann beispielsweise von der Steuerungseinrichtung 109 und/oder von der elektronische Anzeige 111, insbesondere von dem mobilen Kommunikationsgerät 200, umfasst sein.

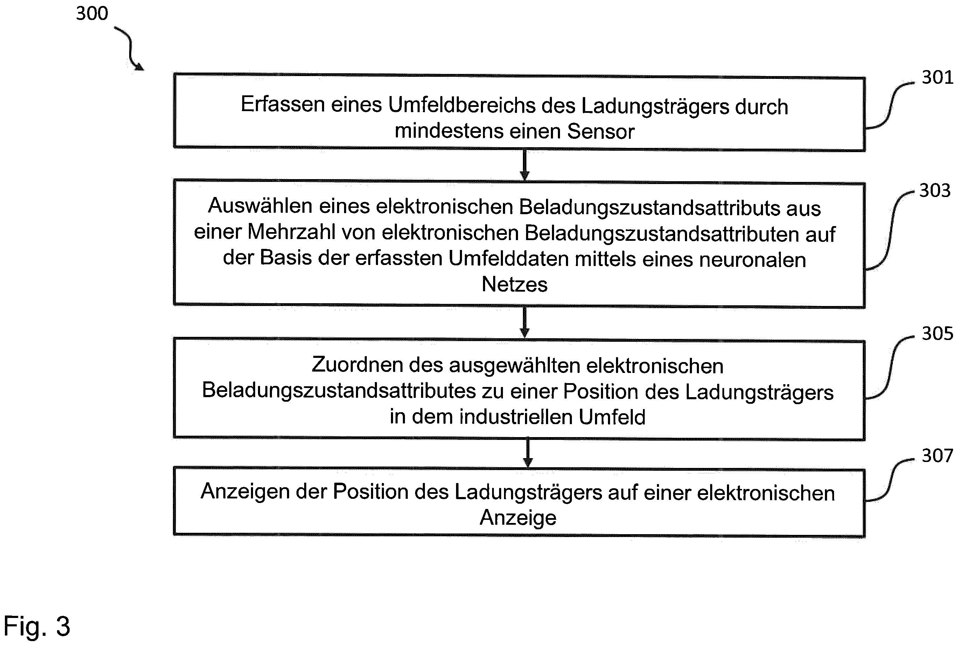

Figur 3 zeigt ein Verfahren 300 gemäß einer Ausführungsform zum automatischen Erfassen des Beladungszustands des Ladungsträgers 101a-g, wobei der Ladungsträger 101a-g wie zu den Figuren 1 und 2 bereits beschrieben in dem industriellen Umfeld angeordnet ist.

Das Verfahren 300 umfasst einen ersten Schritt 301 eines Erfassens eines Umfeldbereichs des Ladungsträgers 101a-g durch den mindestens einen Sensor 107a-k, um erfasste Umfelddaten zu erhalten.

Das Verfahren 300 umfasst ferner einen zweiten Schritt 303 eines Auswählens eines elektronischen Beladungszustandsattributs aus der Mehrzahl von elektronischen Beladungszustandsattributen auf der Basis der erfassten Umfelddaten mittels des neuronalen Netzes, wobei das neuronale Netz zur Auswahl von elektronischen Beladungszustandsattributen eingerichtet ist, wobei das neuronale Netz durch die Steuerungseinrichtung 109 ausgeführt wird, und wobei das elektronische Beladungszustandsattribut den Beladungszustand des Ladungsträgers repräsentiert.

Das Verfahren 300 umfasst ferner einen dritten Schritt 305 eines Zuordnens des ausgewählten elektronischen Beladungszustandsattributes zu der Position des Ladungsträgers 101a-g in dem industriellen Umfeld.

Das Verfahren 300 umfasst ferner einen vierten Schritt 307 eines Anzeigens der Position des Ladungsträgers 101a-g auf der elektronischen Anzeige 111.

### Bezugszeichenliste

- 100: Systemanordnung
- 101a-g: Ladungsträger
- 103a-b: Regalanordnungen
- 105: Gang
- 107a-k: Sensor
- 109: Steuerungseinrichtung
- 111: Elektronische Anzeige
- 200: Mobiles Kommunikationsgerät
- 201: Digitale Karte
- 203: Abbild des industriellen Umfeldes
- 205: Symbole der Ladungsträger
- 300: Verfahren zum automatischen Erfassen eines Beladungszustands eines Ladungsträgers
- 301: Erster Verfahrensschritt: Erfassen eines Umfeldbereichs des Ladungsträgers
- 303: Zweiter Verfahrensschritt: Auswählen eines elektronischen Beladungszustandsattribut
- 305: Dritter Verfahrensschritt: Zuordnen des ausgewählten elektronischen Beladungszustandsattributes
- 307: Vierter Verfahrensschritt: Anzeigen der Position des Ladungsträgers

## Patentansprüche

1. Verfahren (300) zum automatischen Erfassen eines Beladungszustands eines Ladungsträgers (101a-g), wobei der Ladungsträger (101a-g) in einem industriellen Umfeld angeordnet ist, mit folgenden Merkmalen:
Erfassen (301) eines Umfeldbereichs des Ladungsträgers (101a-g) durch mindestens einen Sensor (107a-k), um erfasste Umfelddaten zu erhalten;
Auswählen (303) eines elektronischen Beladungszustandsattributs aus einer Mehrzahl von elektronischen Beladungszustandsattributen auf der Basis der erfassten Umfelddaten mittels eines neuronalen Netzes, wobei das neuronale Netz zur Auswahl von elektronischen Beladungszustandsattributen eingerichtet ist, wobei das neuronale Netz durch eine Steuerungseinrichtung (109) ausgeführt wird, und wobei das elektronische Beladungszustandsattribut den Beladungszustand des Ladungsträgers repräsentiert;
Zuordnen (305) des ausgewählten elektronischen Beladungszustandsattributes zu einer Position des Ladungsträgers (101a-g) in dem industriellen Umfeld; und
Anzeigen (307) der Position des Ladungsträgers (101a-g) auf einer elektronischen Anzeige (111).

2. Verfahren (300) nach Anspruch 1, wobei die Position und das Beladungszustandsattribut in einer digitalen Karte (201) des industriellen Umfelds, insbesondere in einem digitalen Zwilling des industriellen Umfelds, angezeigt werden.

3. Verfahren (300) nach einem der vorstehenden Ansprüche, wobei das industrielle Umfeld durch eine digitale Karte (201), insbesondere durch einen digitalen Zwilling, repräsentiert ist, und wobei die Position des Ladungsträgers (101a-g) aus den Umfelddaten durch die Steuerungseinrichtung (109), insbesondere mittels des neuronalen Netzes oder durch Mustererkennung, bestimmt wird, oder wobei der zumindest eine Sensor (107a-k) die Position des Ladungsträgers (101a-g) erfasst, oder wobei eine von dem Ladungsträger (101a-g) ausgesendete Positionsinformation erfasst wird.

4. Verfahren (300) nach einem der vorstehenden Ansprüche, wobei eine Ausgabe des neuronalen Netzes ein digitaler Merkmalssatz ist, welcher das Beladungszustandsattribut repräsentiert.

5. Verfahren (300) nach einem der vorstehenden Ansprüche, wobei die erfassten Umfelddaten von dem zumindest einen Sensor (107a-k) über ein Kommunikationsnetzwerk an die Steuerungseinrichtung (109) ausgesendet werden.

6. Verfahren (300) nach einem der vorstehenden Ansprüche, wobei der Beladungszustand, insbesondere zusammen mit einer Positionsinformation, über ein Kommunikationsnetzwerk an ein mobiles Kommunikationsgerät (200), insbesondere an ein Smartphone, ausgesendet werden, wobei die elektronische Anzeige (111) durch das mobile Kommunikationsgerät (200) implementiert ist.

7. Verfahren (300) nach Anspruch 5 oder 6, wobei das Kommunikationsnetzwerk zumindest ein drahtloses Kommunikationsnetzwerk umfasst, insbesondere ein WLAN-Kommunikationsnetzwerk, oder ein Bluetooth-Kommunikationsnetzwerk, oder ein 5G-Kommunikationsnetzwerk.

8. Verfahren (300) nach einem der vorstehenden Ansprüche, wobei unterschiedliche Beladungszustände durch unterschiedliche Zusammensetzung der Beladung des Ladungsträgers (101a-g), insbesondere durch eine erste Warengruppe und eine zweite Warengruppe, oder durch unterschiedliche Beladungsmengen des Ladungsträgers (101a-g) bestimmt sind, und wobei das neuronale Netz das Beladungszustandsattribut auswählt, welches einer erfassten Zusammensetzung der Beladung des Ladungsträgers (101a-g) oder einer erfassten Beladungsmenge des Ladungsträgers (101a-g) zugeordnet ist.

9. Verfahren (300) nach einem der vorstehenden Ansprüche, wobei das Auswählen eines elektronischen Beladungszustandsattributs, das Zuordnen des ausgewählten elektronischen Beladungszustandsattributes und das Anzeigen der Position des Ladungsträgers (101a-g) ansprechend auf den Empfang einer elektronischen Anfrage nach Anzeigen von Ladungsträgern (101a-g) mit einem vorbestimmten Beladungszustand ausgeführt werden.

10. Verfahren (300) nach Anspruch 9, wobei die elektronische Anfrage mittels einer Benutzerschnittstelle, insbesondere einer graphischen Benutzerschnittstelle, einer Tastatur und/oder einer Audioschnittstelle erzeugt wird.

11. Verfahren (300) nach Anspruch 10, wobei die Benutzerschnittstelle eine Audioschnittstelle ist, wobei die Audioschnittstelle einen Sprachbefehl eines Benutzers aufnimmt, und wobei der Sprachbefehl durch eine Spracherkennung, insbesondere mittels domainspezifischer Spracherkennung (Domain Specific Language) in die elektronische Anfrage, insbesondere durch die Steuerungseinrichtung (109), transformiert wird.

12. Verfahren (300) nach einem der vorstehenden Ansprüche, wobei der zumindest eine Sensor (107a-k) eine Bildkamera, einen Laser-Scanner und/oder einen Ultraschallsensor implementiert.

13. Verfahren (300) nach einem der vorstehenden Ansprüche, wobei der Ladungsträger (101a-g) eine Palette oder ein Roboter ist.

14. Systemanordnung (100) zum automatischen Erfassen eines Beladungszustands eines Ladungsträgers (101a-g), wobei der Ladungsträger (101a-g) in einem industriellen Umfeld angeordnet ist, mit folgenden Merkmalen:
zumindest einem Sensor (107a-k) zum Erfassen eines Umfeldbereichs des Ladungsträgers (101a-g) durch den mindestens einen Sensor (107a-k), um erfasste Umfelddaten zu erhalten;
einer Steuerungseinrichtung (109), welche ausgebildet ist, ein elektronisches Beladungszustandsattribut aus einer Mehrzahl von elektronischen Beladungszustandsattributen auf der Basis der erfassten Umfelddaten mittels eines neuronalen Netzes auszuwählen, wobei das neuronale Netz zur Auswahl von elektronischen Beladungszustandsattributen eingerichtet ist, wobei das neuronale Netz durch die Steuerungseinrichtung (109) ausgeführt wird, und wobei das elektronische Beladungszustandsattribut den Beladungszustand des Ladungsträgers (101a-g) repräsentiert;
wobei die Steuerungseinrichtung (109) ferner ausgebildet ist, das ausgewählte elektronische Beladungszustandsattribut zu einer Position des Ladungsträgers (101ag) in dem industriellen Umfeld zuzuordnen; und
einer elektronischen Anzeige (111) zum Anzeigen der Position des Ladungsträgers (101a-g), welchem das Beladungszustandsattribut zugeordnet ist.

15. Systemanordnung (100) nach Anspruch 14, welche ausgebildet ist, das Verfahren (300) nach einem der Ansprüche 1 bis 13 auszuführen.
